# EUROPÄISCHE PATENTANMELDUNG

(11) **EP 3 614 117 A1**
(43) Veröffentlichungstag der Anmeldung: **26.02.2020**
(21) Anmeldenummer: 19176507.2
(22) Anmeldetag: 24.05.2019
(51) Int. Cl.: G01M 7/02, F16B 4/00

(54) **SCHWINGLAST ZUM SCHWINGUNGSPRÜFEN EINER WELLE**

(30) Priorität: 21.08.2018 AT 507092018
(71) Anmelder: Prisma Engineering Maschinen- und Motorentechnik GmbH, 8041 Graz (AT)
(72) Erfinder: GSCHWEITL, Ernst, 8200 Gleisdorf (AT)
(74) Vertreter: Weiser & Voith Patentanwälte Partnerschaft

(57) **Zusammenfassung**

Die vorliegenden Erfindung betrifft eine Schwinglast (1) zum Schwingungsprüfen einer Welle (2), umfassend einen Tragkörper (6) mit einer um eine Achse (A) rotationssymmetrischen Öffnung (7) zum lösbaren Verankern eines Wellenendes (8) der Welle (2), in welche Öffnung (7) eine von außen speisbare Schmiermitteldüse (12) mündet, wobei die Öffnung (7) am Tragkörper (6) eine Innenumfangsfläche (9) mit in Achsrichtung (d_{A}) gesehen einem ersten und einem darauffolgenden zweiten Abschnitt (10, 11) ausbildet, und wobei der erste Abschnitt (10) eine erste Steigung (S₁) bezüglich der Achse (A) und der zweite Abschnitt (11) eine zweite Steigung (S₂) bezüglich der Achse (A) aufweist, die geringer ist als die erste Steigung (S₁).

## Beschreibung

Die vorliegende Erfindung betrifft eine Schwinglast zum Schwingungsprüfen einer Welle, umfassend einen Tragkörper mit einer um eine Achse rotationssymmetrischen Öffnung zum lösbaren Verankern eines Wellenendes der Welle, in welche Öffnung eine von außen speisbare Schmiermitteldüse mündet.

Wellen für Antriebe und Motoren, z.B. Antriebs-, Kurbel-, Nockenwellen od. dgl., sind zumindest zeitweise hohen Belastungen ausgesetzt und werden deshalb zum Nachweis ihrer Widerstandsfähigkeit, zu Zulassungszwecken und/oder für wissenschaftliche Untersuchungen intensiven Prüfungen, z.B. Festigkeitsprüfungen, unterworfen. Zur Festigkeitsprüfung wird eine zu prüfende Welle - oder ein Teil davon, z.B. eine Kröpfung einer Kurbelwelle - beispielsweise an einem Prüfstand zum Schwingungsprüfen einseitig eingespannt und an ihrem anderen Wellenende eine Schwinglast befestigt, oder die Welle wird auf dem Prüfstand zentral abgestützt und an jedem Wellenende jeweils eine Schwinglast verankert. An jeder Schwinglast greift ein Schwingungserreger an, z.B. ein Unwuchtmotor oder mehrere synchronisierte Unwuchtmotoren. Der Schwingungserreger belastet gemeinsam mit der Schwinglast die Welle in vorgegebener Schwingungsrichtung, -amplitude und/oder -frequenz durch mehrere Millionen oder mehrere zehn Millionen Lastwechsel hindurch auf Biegung und/oder Torsion meist bis zur Zerstörung der Welle.

Aufgrund der beim Schwinglastprüfen insbesondere großer Wellen über die gesamte Prüfdauer auftretenden sehr hohen Kräfte bzw. Momente kommt der Verankerung der Schwinglast(en) auf der Welle besondere Bedeutung zu: Diese muss einerseits besonders beständig und andererseits nach der Prüfung von der geprüften Welle lösbar sein.

Eine Schwinglast gemäß dem Oberbegriff des Anspruchs 1 ist aus der AT 518.412 B1 oder der EP 3 255 403 A1 bekannt. Die dort gezeigte Schwinglast umfasst ein Lastelement und einen in das Lastelement eingesetzten Ring, in welchem wiederum die Welle verankert wird. Um die Welle leichter im Ring verankern und wieder herausnehmen zu können, wird eine von außen speisbare Schmiermitteldüse eingesetzt. Zu diesem Zweck müssen jedoch Dichtungsringe eingesetzt werden, um die Verbindung zwischen Ring und Welle abzudichten. Diese Schwinglast ist somit einerseits aufgrund der Vielzahl der Verankerungselemente komplex aufgebaut und andererseits ist auch die Verteilung des Schmiermittels zum Einsetzen und Lösen der Welle nicht optimal.

Die Erfindung setzt sich zum Ziel, eine Schwinglast zu schaffen, in der die Welle leichter fixierbar und wieder lösbar ist.

Dieses Ziel wird mit einer Schwinglast der einleitend genannten Art erreicht, welche sich dadurch auszeichnet, dass die Öffnung am Tragkörper eine Innenumfangsfläche mit in Achsrichtung gesehen einem ersten und einem darauffolgenden zweiten Abschnitt ausbildet, wobei der erste Abschnitt eine erste Steigung bezüglich der Achse und der zweite Abschnitt eine zweite Steigung bezüglich der Achse aufweist, die geringer ist als die erste Steigung.

Gemäß der vorliegenden Erfindung wird eine Aufnahme für die Welle geschaffen, die im Inneren eine dachförmige Ausnehmung aufweist, um die Zufuhr und Verbreitung des von der Schmiermitteldüse abgegebenen Schmiermittels zu erleichtern. Durch die genannten Steigungen der Innenumfangsfläche ergibt sich ein Raum, der von dem Schmiermittel rasch und gleichmäßig ausgefüllt werden kann, um das Aufbringen der Schwinglast auf und das Abnehmen der Schwinglast von dem Wellenende zu erleichtern.

Weiters ist auch der Einsatz von Dichtringen nicht mehr obligatorisch, da das Schmiermittel aufgrund der besonderen dachförmigen Konstruktion im Bereich des Tragkörpers gehalten wird. Somit erzielt die erfindungsgemäße Lösung einen effizienteren Einsatz von Schmiermittel bei gleichzeitig vereinfachter Konstruktion.

In einigen Ausführungsformen mündet die Schmiermitteldüse entweder in den ersten oder in den zweiten Abschnitt. Besonders günstig ist es dabei, wenn die Schmiermitteldüse zwischen dem ersten und dem zweiten Abschnitt in die Öffnung mündet. Dadurch wird eine verbesserte Verteilung des Schmiermittels an der Welle in beiden Achsrichtungen erzielt.

Um die Verteilung des Schmiermittels auch über den Umfang der Welle zu verbessern, weist die Innenumfangsfläche zwischen dem ersten und dem zweiten Abschnitt bevorzugt eine umlaufende Nut auf, in die die Schmiermitteldüse mündet. Die Nut erlaubt, dass sich das Schmiermittel unabhängig von der Auflagerlast der Welle auf der Innenoberfläche frei über den Umfang der Welle verteilen kann.

Besonders günstig ist es, wenn die zweite Steigung um 0,02° bis 0,6°, bevorzugt 0,06° bis 0,2°, besonders bevorzugt im Wesentlichen 0,1°, geringer ist als die erste Steigung. Diese Werte - ermittelt durch numerische Simulationen und bestätigt durch praktische Versuche - ergeben eine besonders gute Verteilung des Schmiermittels um die Welle. Einerseits sind die Steigungen groß genug, um einen guten Fluss des Schmiermittels zu gewährleisten, andererseits jedoch noch klein genug, um im Betrieb eine gute Anpressung der Welle an die Innenoberfläche der Schwinglast zu erzielen, sodass der Anpressdruck der eingespannten Welle an den genannten Abschnitten jeweils von außen zur Nut hin, z.B. linear, abfällt.

Um das Austreten des Schmiermittels effizienter zu verhindern, hat die Innenumfangsfläche bevorzugt ferner in Achsrichtung gesehen einen dem ersten Abschnitt vorgeordneten ersten Dichtabschnitt und einen dem zweiten Abschnitt nachgeordneten zweiten Dichtabschnitt mit jeweils einer dritten Steigung bezüglich der Achse, welche dritte Steigung geringer ist als die erste Steigung. Die Dichtabschnitte sind dabei aufeinander ausgerichtet, sodass sie fluchten, d.h. die Dichtabschnitte liegen auf einer gemeinsamen Zylinder- oder Kegelmantelfläche. Das in der Schwinglast zu fixierende Ende der Welle hat in diesen Fällen bevorzugt eine Zylinder- oder Kegelstumpfform, die den Dichtabschnitten in der Form entspricht.

In vorteilhaften Ausführungen liegt der Betrag der dritten Steigung der genannten Dichtabschnitte im Bereich von 0° bis 8°, bevorzugt von 0,5° bis 3°, besonders bevorzugt von 0,8° bis 1,5°. Weiters bevorzugt ist die dritte Steigung um 0,01° bis 0,3°, bevorzugt 0,03° bis 0,1°, besonders bevorzugt im Wesentlichen 0,05°, geringer als die erste Steigung. Diese Werte haben eine besonders gute Verankerung der Welle in der Schwinglast im Betrieb und eine besonders gute Verteilung des Schmiermittels bei der Montage und Demontage der Welle ergeben.

Im Allgemeinen können die erste und die zweite Steigung asymmetrisch bezüglich der gemeinsamen Zylinder- bzw. Kegelmantelfläche der Dichtabschnitte liegen. Bevorzugt sind der erste und der zweite Abschnitt jedoch symmetrisch zu den Dichtabschnitten angeordnet, d.h. die dritte Steigung ist um jenes Maß geringer als die erste Steigung, um das die dritte Steigung größer als die zweite Steigung ist. Die symmetrische Steigungsaufteilung der Abschnitte fördert ein gleichmäßiges Verteilen des Schmiermittels auf der Welle.

Bevorzugt hat der Tragkörper an jeder Axialseite der Öffnung einen Innenabsatz, in welchem jeweils ein Dichtring aufgenommen ist. Dies verbindet die Vorteile der erfindungsgemäßen Ausgestaltung mit jener des Standes der Technik, bei der Dichtungsringe eingesetzt werden, um jedwedes Austreten von Schmiermittel sicher zu verhindern. Hier ist es insbesondere vorteilhaft, wenn der Innenabsatz mit einer Fase versehen ist, um das Aufbringen und Abziehen des Wellenendes zu erleichtern.

Die Schwinglast kann entweder in einer ersten Ausführungsform direkt die genannte Öffnung ausbilden oder in einer zweiten Ausführungsform einen Ring aufnehmen, der die genannte Öffnung aufweist. In der ersten Ausführungsform ist der Tragkörper z.B. ein Lastelement, das mit der genannten Öffnung versehen ist. Dies ist von Vorteil, wenn die Schwinglast dazu verwendet wird, stets Wellen mit demselben Wellendurchmesser zu prüfen. Es müssen keine weiteren Kopplungselemente für die Wellen eingesetzt werden, was die konstruktive Ausgestaltung der Schwinglast erleichtert.

In der zweiten Ausführungsform bildet der Tragkörper einen zum Einsetzen in ein Lastelement ausgebildeten Ring. Dies ermöglicht den Einsatz verschiedener Ringe für verschiedene Wellendurchmesser. Weiters kann in dieser Ausführungsform der Ring in die Schwinglast eingesetzt werden, bevor diese auf die Welle aufgebracht wird.

Bei der Schwinglast der zweiten Ausführungsform ist weiters bevorzugt, dass die Schwinglast ein Lastelement mit zylindrischer Öffnung umfasst, in welcher der Ring aufgenommen ist.

Die Erfindung wird nachstehend anhand eines in den beigeschlossenen Zeichnungen dargestellten Ausführungsbeispiels näher erläutert. In den Zeichnungen zeigen:
Fig. 1 eine Schwinglast gemäß der Erfindung, welche an einem konischen Wellenende einer Kurbelwelle verankert ist, in einem Schnitt entlang der Schnittlinie I-I von Fig. 2;
Fig. 2 die Schwinglast von Fig. 1 in einer Seitenansicht in Achsrichtung der Welle;
Fig. 3 das Detail A von Fig. 1 in vergrößertem Maßstab, wobei die gezeigten Steigungen stark überzeichnet dargestellt sind;
Fig. 4 ein schematisches Beispiel für einen Prüfstand zum Schwingungsprüfen einer Welle mit zwei Schwinglasten gemäß den Fig. 1 bis 3 in Frontansicht; und
die Fig. 5a bis 5c das Detail B des Prüfstandes von Fig. 4 vor dem Aufschieben der Schwinglast von Fig. 1 auf das konische Wellenende (Fig. 5a), in einer unvollständig aufgeschobenen Stellung (Fig. 5b) und in einer vollständig aufgeschobenen, verankerten Stellung (Fig. 5c), jeweils in einem Schnitt entlang der Achsrichtung der Welle.

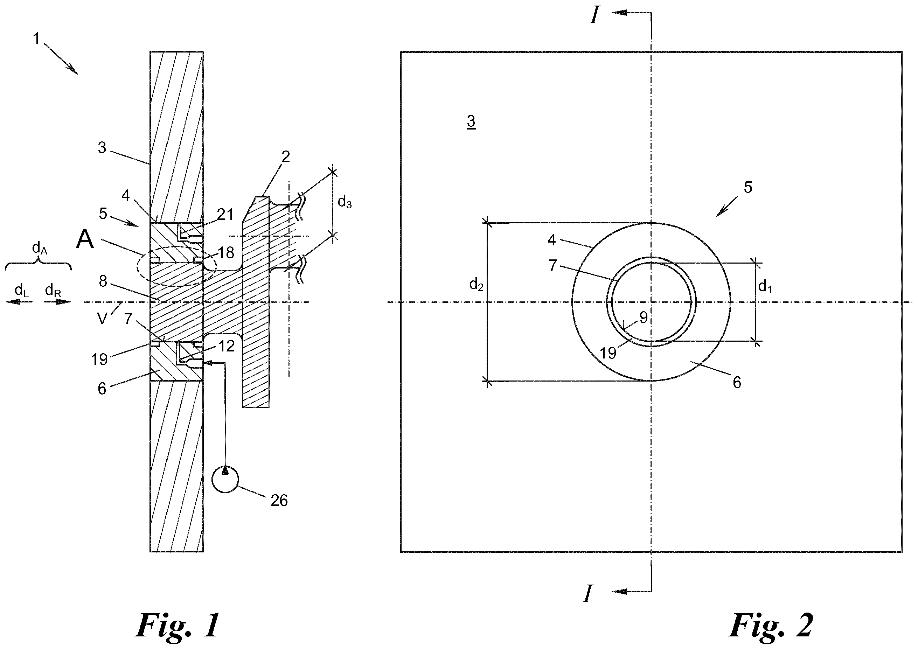

Die Fig. 1 bis 3 zeigen ein Beispiel für eine Schwinglast 1 zum Schwingungsprüfen einer Welle 2 - hier: einer Kurbelwelle 2 bzw. einer einzelnen Kröpfung davon. Die Schwinglast 1 umfasst ein Lastelement 3, welches im vorliegenden Beispiel eine rechteckige Schwingplatte aus Baustahl ist (Fig. 2). Das Lastelement 3 hat eine zylindrische Öffnung 4, in welcher ein Ring 5 aufgenommen ist. Im vorliegenden Beispiel ist der Ring 5 aus hochvergütetem Stahl, d.h. Stahl mit einer Streckgrenze von etwa 1200 N/mm² oder höher.

Der Ring 5 hat einen Tragkörper 6 mit einer Öffnung 7, in welcher ein Wellenende 8 der Welle 2 lösbar verankert ist. Das Wellenende 8 ist dabei an der Welle 2, z.B. durch Drehen oder Fräsen der Welle 2, geformt, oder - wie im Beispiel der Fig. 1 - auf die Kröpfung der Kurbelwelle aufgeschmiedet.

Im Beispiel der Fig. 1 bis 3 ist das Lastelement 3 eine Schwingplatte von etwa 2000 mm x 2400 mm mit einer Dicke von etwa 200 mm; der (mittlere) Durchmesser d₁ der Öffnung 7 beträgt etwa 500 mm und der Durchmesser d₂ der zylindrischen Öffnung 4 etwa 740 mm. Es versteht sich, dass die Schwinglast 1 je nach Erfordernis geeignete andere Abmaße haben kann und das Lastelement 3 keine Platte, insbesondere keine rechteckige Schwingplatte, sein muss, sondern als z.B. kreisrunde oder ovale Schwingplatte oder überhaupt z.B. hebelförmig ausgebildet sein kann und aus einem geeigneten anderen Material als Baustahl bestehen kann. Auch müssen Lastelement 3, Ring 5 und insbesondere Wellenende 8 im verankerten Zustand der Schwinglast 1 auf der Welle 2 nicht notwendigerweise zueinander bündig sein, sondern können in Axialrichtung unterschiedliche Erstreckungen haben.

Der Ring 5 könnte mit Presspassung in der zylindrischen Öffnung 4 des Lastelements 3 aufgenommen sein. Im vorliegenden Beispiel ist der Ring 5 hingegen mit Spielpassung in der zylindrischen Öffnung 4 aufgenommen, solange er nicht an dem Wellenende 8 verankert ist. Dabei ergibt sich dennoch eine Presspassung des Rings 5 in der zylindrischen Öffnung 4, wenn der Ring 5 infolge der Verankerung radial gedehnt wird; so trägt der hochvergütete Ring 5 den überwiegenden Anteil der mechanischen Spannungen infolge der Verankerung, wobei gleichzeitig das Lastelement 3 sicher mit dem Ring 5 verbunden ist.

Alternativ zu dieser Ausführungsform, bei der der Ring 5 als Tragkörper 6 mit der Öffnung 7 in das Lastelement 3 eingesetzt ist, kann der Tragkörper 6 direkt das Lastelement 3 bilden, das die Öffnung 7 aufweist. Es entfällt somit der Bedarf für einen gesondert einsetzbaren Ring 5, sodass die Schwinglast 1 z.B. einstückig ausgebildet sein kann. Die im Folgenden anhand eines Tragkörpers 6 in Form eines Rings 5 dargestellten Merkmale gelten somit auch für jene Ausführungsformen, bei denen der Tragkörper 6 direkt das Lastelement 3 bildet, welches also selbst die Öffnung 7 aufweist.

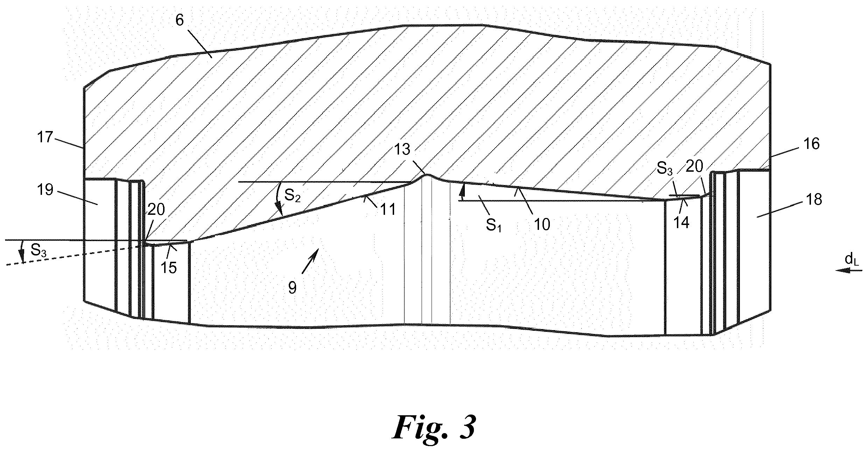

Die Öffnung 7 ist um eine Achse V rotationssymmetrisch und bildet am Tragkörper 6 eine Innenumfangsfläche 9 mit in Achsrichtung d_{A} gesehen einem ersten Abschnitt 10 und einem darauffolgenden zweiten Abschnitt 11 aus, wie in der Detaildarstellung aus Fig. 3 ersichtlich. Die Achsrichtung d_{A} ist in der dargestellten Ausführungsform eine der beiden Richtungen d_{L}, d_{R}, die zur Achse V parallel sind, z.B. die Richtung d_{L}.

Der erste Abschnitt 10 hat eine erste Steigung S₁ bezüglich der Achse V und der zweite Abschnitt 11 eine zweite Steigung S₂ bezüglich der Achse V, die geringer ist als die erste Steigung S₁. Der erste und der zweite Abschnitt 10, 11 bilden somit zusammen eine umlaufende dachförmige Ausnehmung an der Innenumfangsfläche 9 des Tragkörpers 6 aus. Die zweite Steigung S₂ kann beispielsweise um 0,02° bis 0,6°, bevorzugt 0,06° bis 0,2°, besonders bevorzugt im Wesentlichen 0,1°, geringer sein als die erste Steigung S₁. Im Beispiel von Fig. 3 sind die Steigungen S₁, S₂ zur besseren Sichtbarkeit stark überzeichnet. In Realität kann die erste Steigung S₁ beispielsweise 1,05° und die zweite Steigung S₂ 0,95° betragen. In einer anderen Ausführungsform kann die erste Steigung S₁ 0,05° betragen und die zweite Steigung S₂ -0,1°.

Um das Wellenende 8 im Ring 5 zu verankern und von diesem wieder zu lösen, wie im Anschluss im Detail beschrieben, weist der Ring 5 ferner zumindest eine in die Öffnung 7 mündende, von außen gespeiste Schmiermitteldüse 12 auf.

Die Schmiermitteldüse 12 mündet in der in den Fig. 1 - 3 gezeigten Ausführungsform zwischen dem ersten und dem zweiten Abschnitt 10, 11 in die Öffnung 7. Alternativ könnte die Schmiermitteldüse 12 auch direkt in einen der Abschnitte 11, 12 münden, oder auch in jeden der Abschnitte 10, 11 eine gesonderte Schmiermitteldüse münden. Wenn das Schmiermittel von der Schmiermitteldüse 12 in die Öffnung 7 eingebracht wird, verteilt sich das Schmiermittel 12 aufgrund der dachförmigen Ausnehmung der Innenoberfläche 9 über die Welle 2 sowohl in Axialrichtung als auch in Umfangsrichtung.

Wie in Fig. 3 gezeigt, kann die Innenumfangsfläche 9 zwischen dem ersten und dem zweiten Abschnitt 10, 11 eine umlaufende Nut 13 aufweisen, in die die Schmiermitteldüse 12 mündet. Dies ermöglicht einen verbesserten Fluss des Schmiermittels um den Wellenumfang, selbst wenn die Welle 2 unter Verformung des Ringes 5 eng anliegend an die Innenumfangsfläche 9 angepresst ist und der Ring 5 im Bereich der Abschnitte 10 und 11 im Wesentlichen die Form des Wellenendes 8 annimmt.

Aus Fig. 3 ist weiters ersichtlich, dass die Innenumfangsfläche 9 in Achsrichtung d_{L} gesehen optional einen dem ersten Abschnitt 10 vorgeordneten ersten Dichtabschnitt 14 und einen dem zweiten Abschnitt 11 nachgeordneten zweiten Dichtabschnitt 15 mit jeweils einer dritten Steigung S₃ bezüglich der Achse V haben kann, welche dritte Steigung S₃ geringer ist als die erste Steigung S₁ und im Allgemeinen größer ist als die zweite Steigung S₂. Die Innenoberfläche 9 setzt sich somit aus - gesehen in Achsrichtung d_{L} - erstem Dichtabschnitt 14, anschließendem ersten Abschnitt 10, Nut 13, zweitem Abschnitt 11 und anschließendem zweiten Dichtabschnitt 15 zusammen.

Die Dichtabschnitte 14, 15 haben in der gezeigten Ausführungsform eine dritte Steigung S₃, die im Wesentlichen der Form des Wellenendes 8 entspricht, was jedoch nicht zwingend erforderlich ist. Im Allgemeinen können das Wellenende 8 und/oder die Dichtabschnitte 14, 15 zylindrisch oder kegelstumpfförmig ausgebildet sein. Der Betrag der dritten Steigung S₃ liegt hierbei im Bereich von 0° bis 8°, bevorzugt 0,5° bis 3°, besonders bevorzugt 0,8° bis 1,5°. In Zusammenschau mit den zwei oben genannten Beispielen für Steigungsrelationen der ersten und zweiten Steigung S₁, S₂ ist die dritte Steigung S₃ somit um 0,01° bis 0,2°, bevorzugt 0,03° bis 0,1°, besonders bevorzugt im Wesentlichen 0,05°, geringer als die erste Steigung S₁.

Wenn somit, wie im ersten der oben genannten Beispiele, die erste Steigung S₁ etwa 1,05° und die zweite Steigung S₂ etwa 0,95° betragen, so könnte die dritte Steigung S₃ beispielsweise 1° betragen. Es versteht sich, dass sich bei einer Wahl der Achsrichtung d_{A} in die umgekehrte Richtung d_{R} sowohl Bezeichnungen der Abschnitte 10, 11, 14, 15 als auch Vorzeichen der Steigungen S₁, S₂, S₃ entsprechend ändern.

Wenn die Dichtabschnitte 14, 15 kegelstumpfförmig ausgebildet sind, ist es besonders günstig, wenn der Ring 5, solange er nicht an dem Wellenende 8 verankert ist, mit Spielpassung in der zylindrischen Öffnung 4 des Lastelements 3 aufgenommen ist. Beim Verankern des Rings 5 auf dem Wellenende 8 wird durch die Konizität der Dichtabschnitte 14, 15 der Ring 5 so weit elastisch aufgedehnt, dass die Spielpassung in der zylindrischen Öffnung 4 des Lastelements 3 zu einer Presspassung wird und das Lastelement 3 dann sicher am Ring 5 und somit auf der Welle 2 sitzt. Der Ring 5 weitet sich zudem im Bereich des ersten und des zweiten Abschnitts 10, 11 der Innenoberfläche 9 bei der Verankerung des Wellenendes 8 derart auf, dass er in diesem Bereich im Wesentlichen die Form des Wellenendes 8 annimmt, d.h. die erste und die zweite Steigung S₁, S₂ nähern sich bei Verankerung des Wellenendes 8 dann der dritten Steigung S₃ an.

Ferner ist die dachförmige Ausnehmung des ersten und zweiten Abschnitts 10, 11 auf der Innenoberfläche 9 je nach Ausführungsform symmetrisch um die durch die Dichtabschnitte 14, 15 gegebene Zylinder- oder Kegelstumpfform, d.h. die dritte Steigung S₃ ist um dasselbe Maß geringer als die erste Steigung S₁, um das die dritte Steigung S₃ größer als die zweite Steigung S₂ ist.

Gemäß Fig. 3 hat der Ring 5 außerdem an jeder Axialseite 16, 17 der Öffnung 7 einen Innenabsatz 18, 19, in welchem jeweils ein Dichtring (nicht gezeigt) aufgenommen ist. Der Dichtring dient dazu, die Dichtabschnitte 14, 15 dabei zu unterstützen, das von der Schmiermitteldüse 12 in die Öffnung 7 eingebrachte Schmiermittel innerhalb der Öffnung 7 zu halten.

Die Innenabsätze 18, 19 können jeweils auf der dem nächstgelegenen Dichtabschnitt 14, 15 zugewandten Seite mit einer umlaufenden Fase 20 versehen sein.

Optional hat der Ring 5 außerdem zumindest eine weitere in die zylindrische Öffnung 4 mündende Schmiermitteldüse 21, welche ebenso wie die in die Öffnung 7 mündende Schmiermitteldüse 12 von außen gespeist wird. Es versteht sich, dass anstatt bloß jeweils einer Schmiermitteldüse 12, 21 jeweils mehrere Schmiermitteldüsen 12, 21 über den Umfang der zylindrischen bzw. konischen Öffnung 4, 7 verteilt sein können.

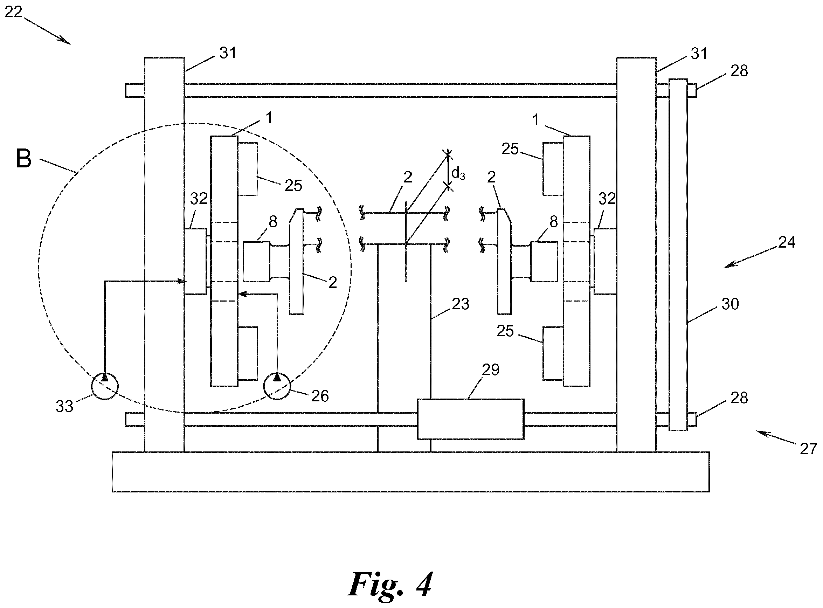

Gemäß Fig. 4 wird die Schwinglast 1 der Fig. 1 bis 3 an einem Prüfstand 22 zum Schwingungsprüfen einer Welle 2 - in diesem Beispiel wieder einer Kurbelwelle bzw. eines Abschnitts davon mit einer oder mehreren Kröpfungen - eingesetzt. Die genannte Schwinglast 1 eignet sich dabei besonders für die Schwinglastprüfung bei sehr hohen Kräften bzw. Momenten, wie sie z.B. bei der Schwingungsprüfung von Antriebs- und/oder Kurbelwellen 2 großer Schiffsantriebe auftreten. Solche Wellen 2 haben Durchmesser d₃ von typisch mehreren hundert Millimetern, die Motoren bis zu 20 Zylinder, wobei die Wellen am Prüfstand 22 in oft mehreren Millionen oder sogar mehreren 10 Millionen Lastwechseln zerstörend geprüft werden. Insbesondere im Falle der Schwingungsprüfung von Kurbelwellen werden häufig bloß eine einzelne oder wenige Kröpfungen der Kurbelwelle entnommen und für die Schwingungsprüfung, z.B. durch Aufschmieden eines konischen Endes oder spanende Bearbeitung der Wellenenden zum Erlangen der gewünschten Konizität, vorbereitet. Eine temporär stabile Verankerung der Schwinglasten 1 an den jeweiligen Wellenenden 8 ist Voraussetzung für die Schwingungsprüfung. Dazu kann die zu prüfende Welle 2 einseitig am Prüfstand eingespannt sein und nur am gegenüberliegenden Wellenende 8 eine Schwinglast 1 verankert sein; meistens, insbesondere beim Torsions-Schwingungsprüfen, wird hingegen an jedem der beiden Wellenenden 7 der zu prüfenden Welle 2 eine eigene Schwinglast 1 verankert.

Der Prüfstand 22 umfasst eine Abstützung 23 für die Welle 2, im Beispiel von Fig. 4 eine zentrale Abstützung. Ferner umfasst der Prüfstand 21 zumindest eine Schwinglast 1 für ein Wellenende 8, einen Antrieb 24 zum axialen Aufschieben der Schwinglast 1 mit der konischen Öffnung 7 auf das konische Wellenende 8 der Welle 2 und zumindest einen Schwingungserreger 25 für den Angriff am Lastelement 3.

Im Beispiel von Fig. 4 ist an jedem Wellenende 8 der Welle 2 jeweils eine Schwinglast 1 zum Verankern vorbereitet. An jeder der Schwinglasten 1 sind als Schwingungserreger 25 jeweils zwei Unwuchtmotoren fest montiert, deren Lauf beim Schwingungsprüfen gegenseitig und auf die Erfordernisse abgestimmt ist. Alternativ können auch andere Schwingungserreger 25 bzw. nur ein oder mehrere Unwuchtmotoren an der Schwinglast 1 montiert sein oder daran angreifen, wie dem Fachmann bekannt ist.

Der Prüfstand 22 umfasst ferner eine Schmiermittelpumpe 26, welche an die zumindest eine Schmiermitteldüse 12 des Rings 5 angeschlossen ist und diese speist. Im Falle zweier Schwinglasten 1 kann die Schmiermittelpumpe 26 an die Schmiermitteldüsen 12 beider Schwinglasten 1 angeschlossen sein, oder es kann für jede Schwinglast 1 eine separate Schmiermittelpumpe 26 vorgesehen sein.

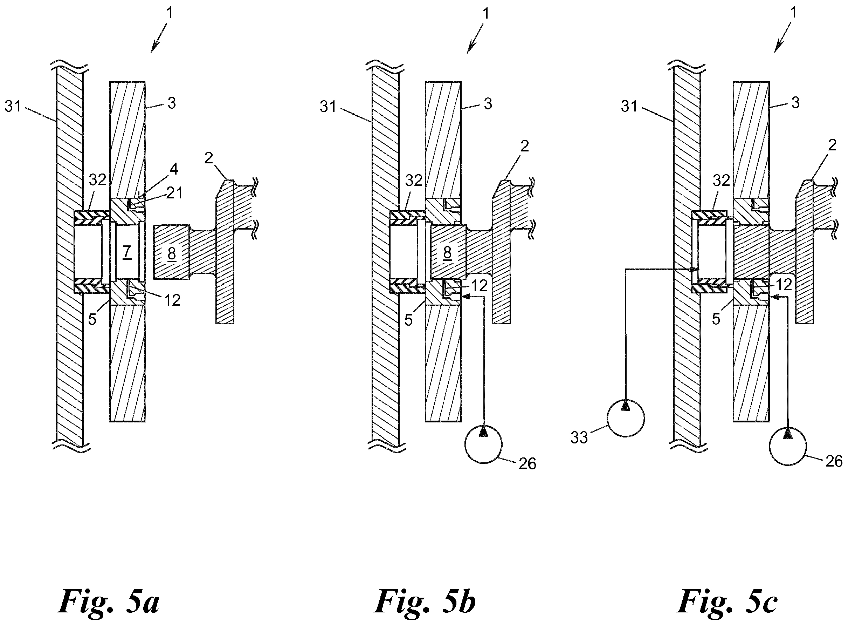

Anhand der Fig. 4 und 5a bis 5c wird im Folgenden beschrieben, auf welche Weise eine Schwinglast 1 lösbar an einer Welle 2 verankert wird.

Zur Vorbereitung des Verankerns wird die Welle 2 an der Wellenabstützung 23 fixiert und, falls erforderlich, z.B. mit deren Hilfe radial und axial am Prüfstand 22 ausgerichtet. Alternativ oder ergänzend dazu kann die jeweilige Schwinglast 1 radial und/oder axial ausgerichtet werden, um das folgende Verankern zu ermöglichen.

Den Zustand vor dem lösbaren Verankern der Schwinglast 1 an der Welle 2 zeigt Fig. 5a. Zum lösbaren Verankern wird die Schwinglast 1 zunächst mit der Öffnung 7 auf das konische Wellenende 8 der Welle 2 axial aufgeschoben (Fig. 5b). Dazu kann der Antrieb 24, wie in Fig. 4 schematisch dargestellt, einen Spindeltrieb 27 mit z.B. zwei oder vier Spindeln 28 haben, von welchen eine von einem Motor 29 direkt angetrieben und die andere(n) durch z.B. einen Riemen 30 geschleppt werden. Die Spindeln 28 treiben zwei Seitenwände 31 des Prüfstands 22, an welchen die Schwinglasten 1 lose gehalten sind.

Darauf wird die Öffnung 7 zwischen dem Tragkörper 6 und dem Wellenende 8 mithilfe der Schmiermittelpumpe 26 über die Schmiermitteldüse 12 mit Schmiermittel druckbeaufschlagt. Der Schmiermitteldruck beträgt dabei einige hundert bis einige tausend bar.

Nun wird die auf dem Schmiermittel gleitende Schwinglast 1 auf das Wellenende 8 weiter aufgeschoben, bis die Schwinglast 1 einen vorgegebenen Klemmsitz auf dem Wellenende 8 erreicht. Für dieses weitere Aufschieben könnte bei geeigneter Auslegung wieder der Spindeltrieb 27 verwendet werden. Im Beispiel der Fig. 4 und 5a bis 5c hat der Prüfstand 22 dazu hingegen für jede Schwinglast 1 jeweils eine Hydraulikmutter 32, welche an der jeweiligen Seitenwand 3 abgestützt ist und mit Hilfe einer Hydraulikpumpe 33 das weitere Aufschieben in axialer Richtung durchführt. Die Hydraulikmutter 32 greift am Ring 5 an und presst diesen gleichsam auf das konische Wellenende 8 auf, wobei sich der Ring 5 radial ausdehnt und dabei einerseits als Grundlage für seine sichere Verankerung unter hoher Radialspannung am Wellenende 8 anliegt und andererseits einen festen Presssitz im Lastelement 3 erlangt. Es versteht sich, dass anstelle des Spindeltriebs 27 und/oder der Hydraulikmutter(n) 32 jeweils andere geeignete Linearantriebe eingesetzt werden könnten.

Fig. 5c zeigt das genannte Erreichen des vorgegebenen Klemmsitzes der Schwinglast 1 auf dem Wellenende 8. Der Klemmsitz kann dabei durch eine Position des Rings 5 am Wellenende 8 und/oder durch einen Druck der Hydraulikpumpe 33 vorgegeben sein.

Bei Erreichen des vorgegebenen Klemmsitzes wird die Druckbeaufschlagung der Schmiermitteldüse 26 beendet und das Schmiermittel aus der Öffnung 7, z.B. über ein Ventil (nicht dargestellt), abgelassen, so dass die Schwinglast 1 sicher an der Welle 2 verankert ist.

Hernach kann die Hydraulikmutter 32 in ihre ursprüngliche Stellung zurückgezogen werden, um für die folgende Schwingungsprüfung ausreichend Spiel gegenüber der Schwinglast 1 zu haben. Der Prüfstand 22 ist nun bereit zum Schwingungsprüfen.

Um die Schwinglast 1 nach dem Schwingungsprüfen wieder aus der Verankerung an der Welle 2 zu lösen, wird zunächst die Innenoberfläche 9 über die Schmiermitteldüse 12 mit Schmiermittel druckbeaufschlagt, und es kann begonnen werden, die Schwinglast 1 von der Welle 2 abzuziehen. Hierauf wird die Druckbeaufschlagung mit Schmiermittel beendet und das Schmiermittel aus der Öffnung 7 abgelassen. Hinterher kann die Schwinglast 1 vom Wellenende weiter, und somit vollends, abgezogen werden.

Umfasst der Ring 5 die genannte weitere Schmiermitteldüse 21, welche in die zylindrische Öffnung 4 mündet, so kann optional zur Vereinfachung des Lösens der Verankerung der Schwinglast 1 an der Welle 2 zunächst die zylindrische Öffnung 4 durch diese weitere Schmiermitteldüse 21, z.B. mit Hilfe der Schmiermittelpumpe 26 oder einer separaten Schmiermittelpumpe, druckbeaufschlagt und zunächst das Lastelement 3 vom Ring 5 abgezogen werden, so dass der Ring 5 in radialer Richtung nach außen nicht weiter vorgespannt ist, worauf das Abziehen des Rings 5 von der Welle 2 nach dem zuvor beschriebene Verfahren einfacher vonstatten geht.

Die Erfindung ist nicht auf die dargestellten Ausführungsformen beschränkt, sondern umfasst alle Varianten, Modifikationen und Kombinationen, die in den Rahmen der angeschlossenen Ansprüche fallen.

## Patentansprüche

1. Schwinglast zum Schwingungsprüfen einer Welle, umfassend einen Tragkörper (6) mit einer um eine Achse (A) rotationssymmetrischen Öffnung (7) zum lösbaren Verankern eines Wellenendes (8) der Welle (2), in welche Öffnung (7) eine von außen speisbare Schmiermitteldüse (12) mündet,
**dadurch gekennzeichnet, dass** die Öffnung (7) am Tragkörper (6) eine Innenumfangsfläche (9) mit in Achsrichtung (d_{A}) gesehen einem ersten und einem darauffolgenden zweiten Abschnitt (10, 11) ausbildet, wobei der erste Abschnitt (10) eine erste Steigung (S₁) bezüglich der Achse (A) und der zweite Abschnitt (11) eine zweite Steigung (S₂) bezüglich der Achse (A) aufweist, die geringer ist als die erste Steigung (S₁).

2. Schwinglast nach Anspruch 1, **dadurch gekennzeichnet, dass** die Schmiermitteldüse (12) zwischen dem ersten und dem zweiten Abschnitt (10, 11) in die Öffnung (7) mündet.

3. Schwinglast nach Anspruch 1 oder 2, **dadurch gekennzeichnet, dass** die Innenumfangsfläche (9) zwischen dem ersten und dem zweiten Abschnitt (10, 11) eine umlaufende Nut (13) aufweist, in die die Schmiermitteldüse (12) mündet.

4. Schwinglast nach einem der Ansprüche 1 bis 3, **dadurch gekennzeichnet, dass** die zweite Steigung (S₂) um 0,02° bis 0,6°, bevorzugt 0,06° bis 0,2°, besonders bevorzugt im Wesentlichen 0,1°, geringer ist als die erste Steigung (S₁).

5. Schwinglast nach einem der Ansprüche 1 bis 4, **dadurch gekennzeichnet, dass** die Innenumfangsfläche (9) ferner in Achsrichtung (d_{A}) gesehen einen dem ersten Abschnitt (10) vorgeordneten ersten Dichtabschnitt (14) und einen dem zweiten Abschnitt (11) nachgeordneten zweiten Dichtabschnitt (15) mit jeweils einer dritten Steigung (S₃) bezüglich der Achse (A) hat, welche dritte Steigung (S₃) geringer ist als die erste Steigung (S₁).

6. Schwinglast nach Anspruch 5, **dadurch gekennzeichnet, dass** der Betrag der dritten Steigung (S₃) im Bereich von 0° bis 8°, bevorzugt von 0,5° bis 3°, besonders bevorzugt von 0,8° bis 1,5°, liegt.

7. Schwinglast nach Anspruch 5 oder 6, **dadurch gekennzeichnet, dass** die dritte Steigung (S₃) um 0,01° bis 0,3°, bevorzugt 0,03° bis 0,1°, besonders bevorzugt im Wesentlichen 0,05°, geringer ist als die erste Steigung (S₁).

8. Schwinglast nach einem der Ansprüche 5 bis 7, **dadurch gekennzeichnet, dass** die dritte Steigung (S₃) um jenes Maß geringer als die erste Steigung (S₁) ist, um das die dritte Steigung (S₃) größer als die zweite Steigung (S₂) ist.

9. Schwinglast nach einem der Ansprüche 1 bis 8, **dadurch gekennzeichnet, dass** der Tragkörper (6) an jeder Axialseite (16, 17) der Öffnung (7) einen Innenabsatz (18, 19) hat, in welchem jeweils ein Dichtring aufgenommen ist.

10. Schwinglast nach Anspruch 9, **dadurch gekennzeichnet, dass** der Innenabsatz (18, 19) mit einer Fase (20) versehen ist.

11. Schwinglast nach einem der Ansprüche 1 bis 10, **dadurch gekennzeichnet, dass** der Tragkörper (6) ein Lastelement (3) ist, das mit der genannten Öffnung (7) versehen ist.

12. Schwinglast nach einem der Ansprüche 1 bis 10, **dadurch gekennzeichnet, dass** der Tragkörper (6) ein zum Einsetzen in ein Lastelement (3) ausgebildeter Ring (5) ist.

13. Schwinglast nach Anspruch 12, **dadurch gekennzeichnet, dass** die Schwinglast (1) ein Lastelement (3) mit zylindrischer Öffnung (4) umfasst, in welcher der Ring (5) aufgenommen ist.
